# FASCICULE DE BREVET EUROPEEN

(11) **EP 1 764 891 B1**
(45) Date de publication et mention de la délivrance du brevet: **17.04.2019**
(21) Numéro de dépôt: 06354027.2
(22) Date de dépôt: 12.09.2006
(51) Int. Cl.: H02H 3/33, H02H 3/04, H02H 5/10

(54) **Déclencheur électronique pourvu de moyens de surveillance et procédé de surveillance correspondant**
Elektronische Auslösevorrichtung mit Überwachungsmittel und entsprechendes Überwachungsverfahren
Electronic trip device equipped with monitoring means and corresponding monitoring method

(30) Priorité: 16.09.2005 FR 0509488
(43) Date de publication de la demande: 21.03.2007
(73) Titulaire: Schneider Electric Industries SAS, 92500 Rueil-Malmaison (FR)
(72) Inventeur: Houbre, Pascal, 38050 Grenoble Cedex 09 (FR); Perron, Patrick, 38050 Grenoble Cedex 09 (FR)
(74) Mandataire: Tripodi, Paul

(56) Documents cités:
- EP-A- 0 785 610
- EP-A- 0 936 716
- EP-A- 1 467 460
- DE-A1- 19 925 963

## Description

### DOMAINE TECHNIQUE DE L'INVENTION

L'invention relève du domaine des disjoncteurs, notamment des déclencheurs électroniques équipant ces disjoncteurs.

L'invention concerne plus particulièrement un déclencheur électronique comprenant :
- au moins un capteur de courant pour fournir un signal représentatif de l'intensité d'un courant primaire dans un conducteur principal,
- un actionneur destiné à actionner un mécanisme d'ouverture du conducteur principal, et
- un ensemble électronique de traitement pour commander ledit actionneur en fonction de valeurs dudit signal représentatif de l'intensité du courant primaire.

L'invention concerne, en outre, un disjoncteur comprenant :
- au moins un conducteur principal,
- un mécanisme d'ouverture du conducteur principal, et
- un déclencheur électronique avec au moins un capteur de courant pour fournir un signal représentatif de l'intensité du courant dans le conducteur principal, un actionneur et un ensemble électronique de traitement pour commander ledit actionneur en fonction de valeurs dudit signal représentatif de l'intensité du courant primaire.

L'invention concerne également un procédé de surveillance de l'état de connexions d'un déclencheur électronique comportant :
- la fourniture d'un signal représentatif de l'intensité d'un courant primaire dans un conducteur principal du disjoncteur, à l'aide d'au moins un capteur de courant,
- l'actionnement d'un mécanisme d'ouverture du conducteur principal à l'aide d'un actionneur, et
- la commande dudit actionneur en fonction de valeurs dudit signal représentatif de l'intensité du courant primaire.

### ETAT DE LA TECHNIQUE

L'ensemble électronique de traitement des déclencheurs de l'art antérieur comporte souvent des fonctionnalités auxiliaires à celle de la commande de l'actionneur. Par exemple, l'ensemble électronique de traitement peut comporter une fonctionnalité permettant de signaler des informations concernant les circonstances du déclenchement du disjoncteur.

Compte tenu de leur longue durée de vie dans les installations électriques et de leur caractère passif, les disjoncteurs doivent généralement pouvoir déclencher à tout moment, de manière fiable et reproductible. La fiabilité des disjoncteurs est généralement assurée par la mise en oeuvre de contraintes sévères lors de leur conception et de leur fabrication.

Pour assurer une sécurité maximale, certains déclencheurs sont prévus pour déclencher dès le moindre problème. Par exemple, la demande de brevet européen EP 0 244 284 décrit un déclencheur instantané pour disjoncteur limiteur, dans lequel une interruption du circuit de connexion du capteur de courant au bloc déclencheur provoque un déclenchement du disjoncteur. Un courant continu est injecté dans l'enroulement secondaire du capteur de courant afin de contrôler l'intégrité dudit capteur et de ses connexions. Le déclencheur divulgué permet également de détecter la cause du déclenchement.

Par ailleurs, la demande de brevet EP 0 785 610 décrit un déclencheur pourvu d'un dispositif de surveillance comportant des moyens de test pour contrôler le déclencheur. Un programme permet d'initier des phases de fonctionnement dédiées au test.

Les déclencheurs électroniques connus permettent généralement d'assurer une bonne sécurité. Cependant, ces déclencheurs ne permettent pas d'assurer, en même temps, le contrôle de leur intégrité et la sécurité, ainsi qu'une bonne disponibilité, par exemple en présence de défauts.

### EXPOSE DE L'INVENTION

Un objet de l'invention est un déclencheur électronique ayant une disponibilité et une sécurité élevée.

L'invention porte donc sur un déclencheur électronique tel que défini à la revendication 1.

Selon un mode de réalisation de l'invention, les moyens de contrôle de l'état des connexions du au moins un capteur du courant comprennent des moyens de test dotés d'une source de courant destinée à faire circuler un premier courant de test dans le capteur de courant, ladite source de courant étant reliée audit capteur de courant par l'intermédiaire d'une résistance limitatrice de l'intensité dudit premier courant de test de sorte que, sans déconnexion dudit capteur de courant, le premier courant de test se superpose au signal représentatif de l'intensité du courant primaire. De préférence, la source de courant comporte un pont diviseur de tension dont le point milieu est relié à la résistance limitatrice, ledit point milieu fournissant une tension source.

Avantageusement, le au moins un capteur de courant fournit un signal de tension d'entrée, de sorte que :
- sans déconnexion dudit capteur de courant, le signal de tension d'entrée est sensiblement égal au produit d'une résistance dudit capteur de courant et du courant représentatif du courant primaire auquel est superposé le premier courant de test délivré par la source de courant, et
- en cas de déconnexion dudit capteur de courant, le signal de tension d'entrée est sensiblement égal à la tension source de la source de courant.

Selon un mode de réalisation de l'invention, le déclencheur comporte des moyens de pré-traitement du signal de tension d'entrée dotés de moyens de filtrage, lesdits moyens de pré-traitement étant destinés à fournir un signal prétraité à des moyens de commande de l'actionneur d'une part, et à des moyens de commande des moyens d'affichage d'autre part. De préférence, les moyens de pré-traitement comportent, en outre, un amplificateur et un convertisseur numérique. Avantageusement, les moyens de pré-traitement sont reliés aux moyens de commande de l'actionneur par l'intermédiaire de moyens de traitement comprenant :
- une correction de l'offset, et
- une sélection des signaux n'ayant pas changé de signe pendant une durée prédéterminée.

Selon un mode de réalisation de l'invention, l'ensemble électronique de traitement comporte des moyens de contrôle de défauts du déclencheur reliés aux moyens de commande des moyens d'affichage pour afficher, en outre, la présence de défauts dans le déclencheur. De préférence, les défauts sont choisis parmi : une température anormale, un fonctionnement incorrect d'un circuit intégré, un réglage incorrect des seuils de déclenchement, et/ou une tension anormale aux bornes d'un condensateur de stockage d'énergie de l'actionneur.

Selon un mode de réalisation de l'invention, les moyens de contrôle de l'état des connexions de l'actionneur agissent sur l'alimentation électrique des moyens d'affichage pour afficher l'état des connexions de l'actionneur. De préférence, les moyens de contrôle de l'état des connexions de l'actionneur comportent une alimentation destinée à faire circuler un second courant de test dans l'actionneur et à travers une résistance limitatrice de courant connectée en dérivation avec les moyens de commande de l'actionneur, la valeur de ladite résistance étant choisie de façon à limiter l'intensité du second courant de test à une valeur inférieure à un seuil de déclenchement de l'actionneur. Le second courant de test est avantageusement fourni par un condensateur de stockage d'énergie électrique couplé avec l'actionneur.

De préférence, les moyens d'affichage sont agencés par rapport aux moyens de contrôle de l'état des connexions de l'actionneur, de sorte que lesdits moyens d'affichage sont alimentés électriquement par le second courant de test uniquement en l'absence de déconnexion de l'actionneur.

Selon un mode de réalisation de l'invention, les moyens d'affichage comportent une diode luminescente qui est maintenue allumée ou clignotante uniquement en l'absence de déconnexion du ou des capteurs de courant et/ou de l'actionneur. De préférence, la diode luminescente des moyens d'affichage est maintenue allumée ou clignotante uniquement en l'absence de déconnexion du ou des capteurs de courant et/ou de l'actionneur, et en l'absence de défaut.

Selon un mode de réalisation, le déclencheur comporte une prise test. Avantageusement, la prise de test peut être raccordée à un boîtier de test, pour

Selon un mode de réalisation, le déclencheur comporte une prise test. Avantageusement, la prise de test peut être raccordée à un boîtier de test, pour vérifier l'état des connexions du ou des capteur(s) de courant et/ou de l'actionneur et/ou du bon fonctionnement du circuit intégré.

Selon un mode de réalisation, le déclencheur comporte des moyens de communication permettant de reporter l'état des connexions du au moins un capteur de courant et/ou de l'actionneur et/ou des défauts du déclencheur.

Selon un mode de réalisation, le déclencheur comporte des moyens de traitement permettant de commander l'actionneur en fonction de l'état des connexions du au moins un capteur de courant et/ou de l'actionneur et/ou des défauts du déclencheur.

L'invention concerne également un disjoncteur comprenant :
- au moins un conducteur principal,
- un mécanisme d'ouverture de contacts en série avec le conducteur principal, et
- un déclencheur électronique avec au moins un capteur de courant pour fournir un signal représentatif de l'intensité du courant dans le conducteur principal, un actionneur et un ensemble électronique de traitement pour commander ledit actionneur en fonction de valeurs dudit signal représentatif de l'intensité du courant primaire,
dans lequel, ledit déclencheur est un déclencheur tel que celui décrit précédemment, comportant des moyens d'affichage représentatif de l'état de connexions du au moins un capteur de courant et/ou de l'actionneur.

L'invention concerne également un procédé de surveillance de l'état de connexions d'un déclencheur électronique tel que défini à la revendication 21.

Selon un mode de réalisation du procédé, il comporte, lors du contrôle de l'état des connexions du au moins un capteur de courant, la circulation d'un premier courant de test dans le capteur de courant se superposant au signal représentatif de l'intensité du courant primaire.

De préférence, le procédé comporte, lors du contrôle de l'état des connexions du au moins un capteur de courant, la fourniture d'un signal de tension d'entrée,
- sans déconnexion dudit capteur de courant, le signal de tension d'entrée étant sensiblement égal au produit d'une résistance dudit capteur de courant et du courant représentatif du courant primaire auquel est superposé le premier courant de test délivré par la source de courant, et
- en cas de déconnexion dudit capteur de courant, le signal de tension d'entrée étant sensiblement égal à une tension source de la source de courant.

Selon un mode de réalisation, le procédé comporte le pré-traitement du signal de tension d'entrée, ledit pré-traitement comprenant une étape de filtrage. De préférence, le pré-traitement du signal de tension d'entrée comprend, en outre, une étape d'amplification et une étape de conversion numérique dudit signal de tension d'entrée prétraité afin d'afficher l'état des connexions du au moins un capteur de courant.

Selon un mode de réalisation, le procédé comporte le traitement du signal de tension d'entrée prétraité de manière à réaliser :
- une correction de l'offset, et
- une sélection des signaux n'ayant pas changé de signe pendant une durée prédéterminée.

Selon un mode de réalisation, le procédé comporte le contrôle de défauts du déclencheur et la commande d'affichage pour afficher, en outre, l'état des défauts du déclencheur. De préférence, les défauts du déclencheur sont choisis parmi : une température anormale, un fonctionnement incorrect d'un circuit intégré, un réglage incorrect des seuils de déclenchement, et/ou une tension anormale aux bornes d'un condensateur de stockage d'énergie de l'actionneur.

Selon un mode de réalisation, le procédé comporte l'alimentation électrique des moyens d'affichage uniquement en l'absence de déconnexion de l'actionneur. De préférence, le procédé comporte la circulation d'un second courant de test dans l'actionneur et la limitation de l'intensité dudit courant de test à une valeur inférieure à un seuil de déclenchement de l'actionneur. Le procédé comporte avantageusement l'alimentation électrique des moyens d'affichage par le second courant de test.

### BREVE DESCRIPTION DES FIGURES

D'autres avantages et caractéristiques ressortiront plus clairement de la description qui suit d'un mode particulier de réalisation de l'invention, donné à titre d'exemple non limitatif, et représenté dans les figures annexées.
La figure 1 représente un schéma bloc des principales composantes d'un disjoncteur de type connu.
La figure 2 représente un schéma bloc des principales composantes d'un disjoncteur selon un mode de réalisation l'invention.
La figure 3 représente un schéma bloc d'un déclencheur électronique selon un mode de réalisation de l'invention
La figure 4 représente un mode de réalisation des moyens de test de l'état de connexions d'un capteur de courant et des moyens de filtrage associés à deux capteurs de courant correspondant aux conducteurs principaux du disjoncteur.
La figure 5 représente un schéma bloc illustrant le pré-traitement d'un signal de tension d'entrée issu d'un capteur de courant et des moyens de contrôle de l'état de connexions dudit capteur de courant, et le traitement dudit signal jusqu'à la commande de l'actionneur et des moyens d'affichage.
La figure 6 représente une partie d'un déclencheur du côté de l'actionneur comportant, entre autres, les moyens de contrôle de l'état de connexions de l'actionneur et les moyens d'affichage.

### DESCRIPTION DETAILLEE D'UN MODE DE REALISATION

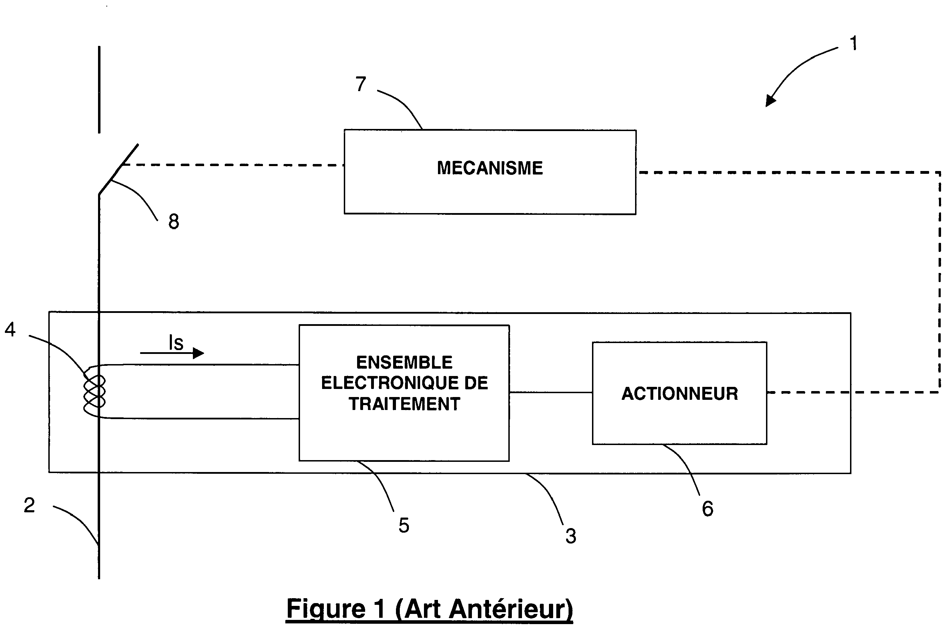

Le disjoncteur 1 représenté à la figure 1 comporte, en série avec un contact 8, un conducteur principal 2. Dans le cas illustré, le réseau électrique sur lequel le disjoncteur est monté comporte seulement un conducteur principal 2. Le dispositif de l'invention concerne aussi la protection de réseaux électriques comportant un nombre quelconque de conducteurs.

Le disjoncteur 1 est équipé d'un déclencheur 3 comportant un capteur de courant représenté par une bobine 4. Le capteur de courant fournit un signal Is représentatif de l'intensité du courant primaire dans le conducteur auquel il est associé.

Le déclencheur 3 comporte, en outre, un ensemble électronique de traitement 5 destiné à commander un actionneur 6 à partir du signal Is représentatif de l'intensité du courant primaire.

L'actionneur 6 permet d'ouvrir le conducteur principal par l'intermédiaire d'un mécanisme 7 agissant sur l'ouverture du contact 8.

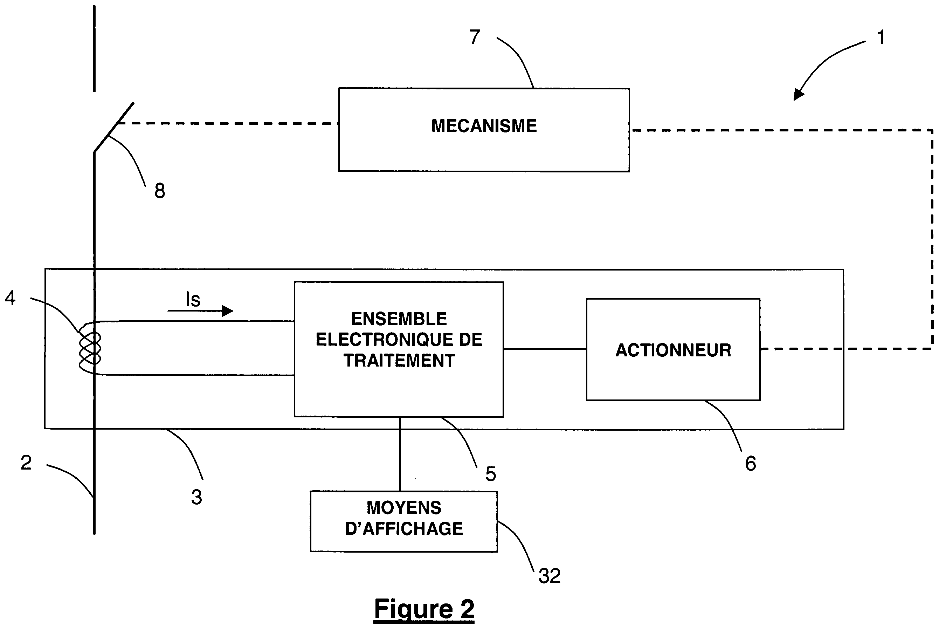

Le disjoncteur de la figure 2 comporte l'ensemble des éléments représentés à la figure 1. De surcroît, le disjoncteur représenté comporte des moyens d'affichage 32 permettant d'afficher l'état de connexions du au moins un capteur de courant 4 et/ou de l'actionneur.

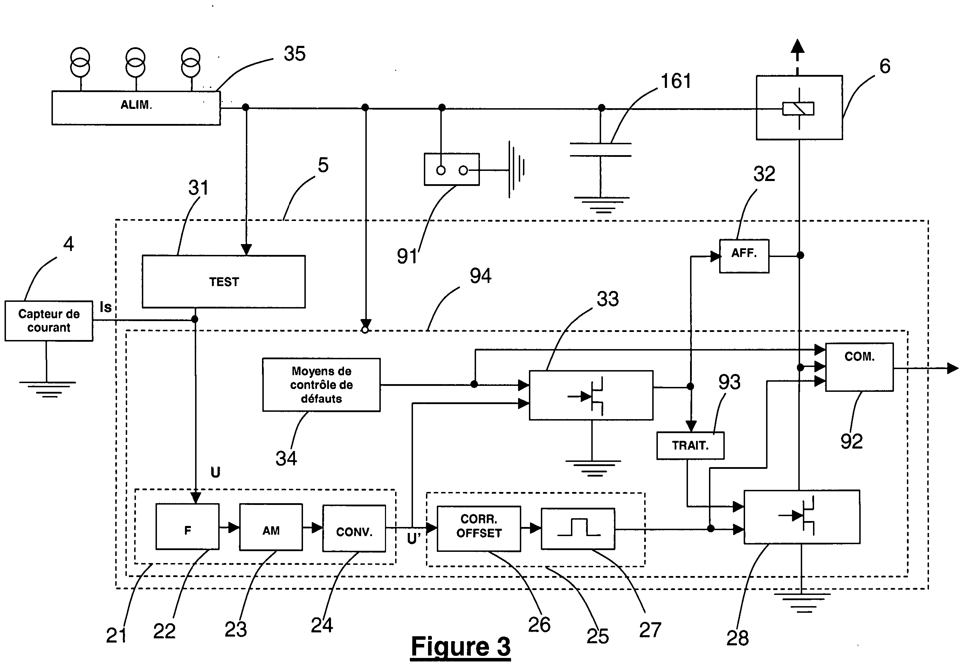

Dans le mode de réalisation représenté à la figure 3, le déclencheur comporte un capteur de courant 4, un ensemble électronique de traitement 5 doté d'un circuit de traitement 94, et un actionneur 6. Le déclencheur comporte, en outre, des moyens de pré-traitement 21 destinés à traiter un signal de tension d'entrée U comportant une composante liée au signal Is représentatif de l'intensité du courant primaire dans le conducteur principal auquel le capteur de courant est associé. Dans le mode de réalisation représenté, les moyens de pré-traitement 21 comportent des moyens de filtrage 22, un amplificateur 23 et un convertisseur 24 pour convertir le signal analogique en signal numérique.

Dans le mode de réalisation représenté à la figure 3, les moyens de pré-traitement fournissent un signal prétraité U' à des moyens de traitement 25 comprenant un module de correction de l'offset 26 et un module 27 de sélection des signaux n'ayant pas changé de signe pendant une durée prédéterminée. La correction d'offset consiste à éliminer la composante continue du signal. L'offset est souvent généré par les composants électroniques du déclencheur. Comme cela est expliqué ci-après, l'offset est également généré par les moyens de contrôle de l'état des connexions du capteur de courant. En ce qui concerne le module 27 de sélection des signaux n'ayant pas changé de signe pendant une durée prédéterminée, son utilisation permet d'éviter tout déclenchement intempestif de l'actionneur en réponse à des signaux parasites se superposant au signal représentatif du courant primaire et ayant une amplitude supérieure au seuil de déclenchement le plus bas pendant une durée relativement courte. La durée prédéterminée est généralement de l'ordre de plusieurs millisecondes.

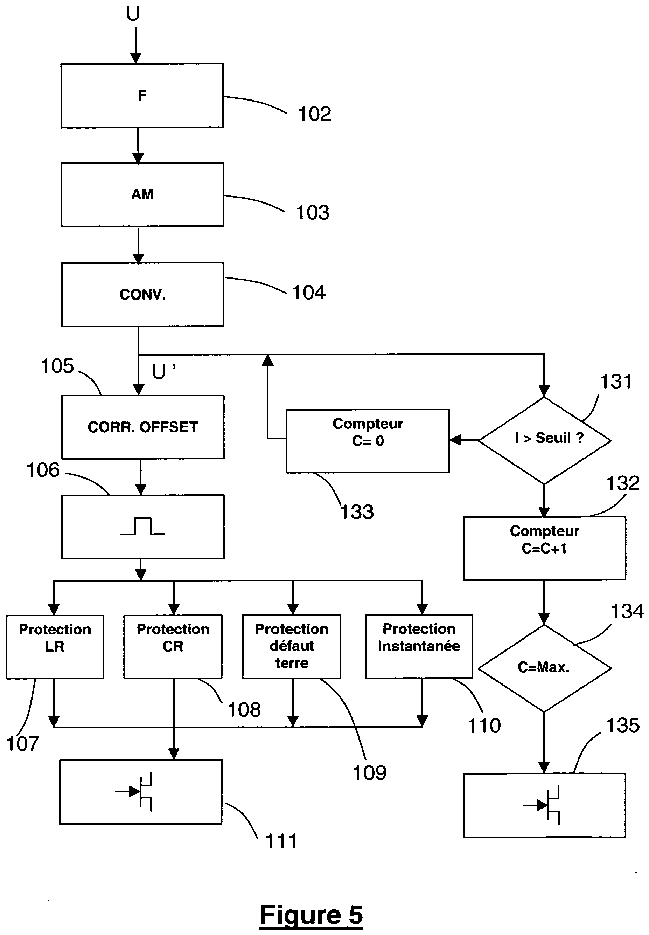

Le signal ainsi traité est ensuite envoyé à des moyens de commande 28 de l'actionneur 6 dont la fonction principale est de fournir un ordre de déclenchement à l'actionneur en réponse à un signal Is correspondant à une intensité du courant primaire dépassant au moins un seuil de déclenchement du disjoncteur. Les moyens de commande 28 peuvent comporter un certain nombre de modules de commande en parallèle, chacun de ces modules étant configuré pour déclencher à des seuils d'intensité du courant primaire différents et/ou avec des temps de réponse différents. Le processus de ces modules de commande est représenté de manière plus détaillée à la figure 5. Par temps de réponse, on entend la durée de dépassement d'un seuil au-delà de laquelle l'actionneur est actionné. Ainsi, les moyens de commande de l'actionneur peuvent, par exemple, comporter un module de commande de type instantanée Sélectif-limiteur, c'est à dire avec des temps de réponse quasiment instantanés, un module de commande du type court retard pour la protection des court-circuits, et un module de commande du type long retard pour la protection des surcharges. En outre, les moyens de commande de l'actionneur peuvent comporter un module de commande du type défaut de terre, c'est à dire permettant de fournir un ordre de déclenchement en présence d'un courant de fuite vers la terre.

Le déclencheur représenté à la figure 3 comporte des moyens de contrôle de l'état des connexions du capteur de courant dotés de moyens de test 31, des moyens d'affichage 32 de l'état de fonctionnement du déclencheur, et des moyens de commande 33 des moyens d'affichage. Les moyens de test 31 agissent sur les moyens d'affichage 32 pour afficher l'état des connexions de chaque capteur de courant. Cette action est réalisée par l'intermédiaire des moyens de pré-traitement 21 et des moyens de commande 33, le signal U' fourni par les moyens de pré-traitement 21 à partir d'un signal de tension d'entrée U du capteur de courant étant envoyé vers lesdits moyens de commande 33. Dans le mode représenté à la figure 3, les moyens de contrôle de l'état des connexions du capteur de courant comprennent les moyens de test 31 ainsi que les moyens de pré-traitement 21 fournissant un signal prétraité U' permettant aux moyens de commande 33 de commander l'affichage de l'état des connexions dudit capteur de courant. Le signal prétraité U' est utilisé pour agir, à la fois, sur les moyens d'affichage 32 en cas de déconnexion du capteur de courant, et sur les moyens de commande 28 de l'actionneur 6 au cas où l'intensité du courant primaire dépasserait au moins un seuil de déclenchement. Ainsi, les moyens de contrôle de l'état des connexions du capteur de courant agissent sur les moyens d'affichage tout en maintenant le traitement pour commander l'actionneur 6 en fonction de valeurs du signal Is représentatif de l'intensité du courant primaire, c'est à dire sans altérer l'aptitude du déclencheur à détecter une surintensité du courant primaire pour commander l'ouverture des contacts 8 du conducteur principal 2 par l'intermédiaire de l'actionneur 6.

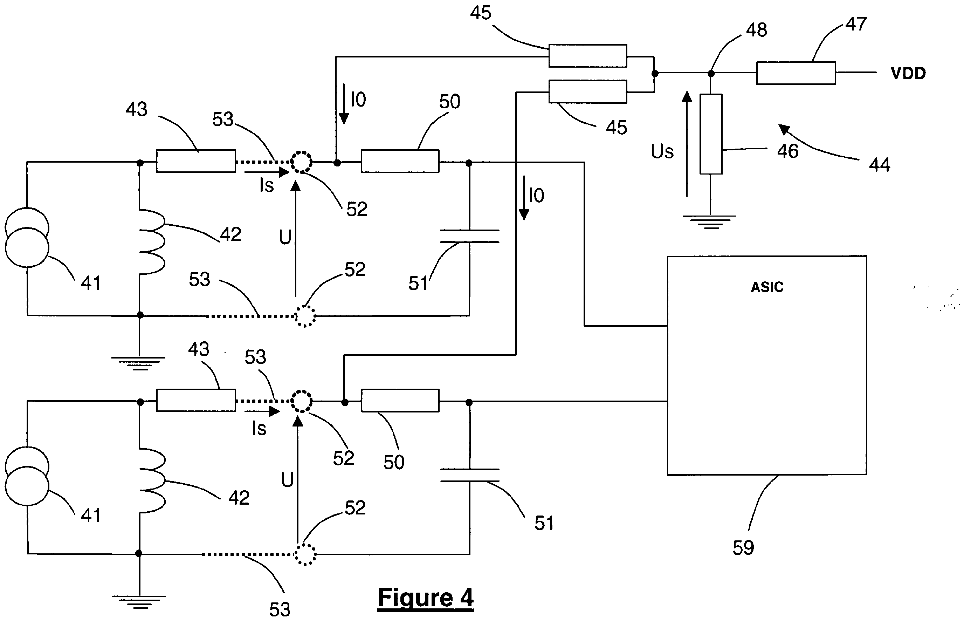

Dans le mode de réalisation représenté à la figure 4, les capteurs de courant sont représentés schématiquement par une source de courant 41 connectée en parallèle avec une inductance 42 et en série avec une résistance 43 correspondant à la résistance de la bobine et dont la valeur est faible par rapport à l'ensemble du circuit. Les capteurs de courant peuvent être de type air ou des tores de Rogowski. Les moyens de contrôle de l'état de connexions de chaque capteur de courant comportent des moyens de test dotés d'une source de courant 44 destinée à faire circuler un premier courant de test I0 dans chaque capteur de courant, ladite source de courant étant reliée à chacun des capteurs de courant par l'intermédiaire de résistances 45 limitatrices de l'intensité dudit premier courant de test I0 de sorte que, en l'absence de déconnexion dudit capteur de courant, le premier courant de test I0 se superpose au signal Is représentatif de l'intensité du courant primaire. La valeur des résistances 45 est généralement élevée, ce qui permet de limiter l'intensité du premier courant de test dans la bobine. Le premier courant de test I0 peut être continu, de basse fréquence ou de très basse fréquence.

Les moyens de test comportent donc une source de courant 44, représentée à la figure 4 par une source de tension VDD et un pont diviseur de tension comportant deux résistances 46 et 47 connectées en série entre la terre et la source de tension VDD. La tension source Us au point milieu 48 du pont diviseur, situé entre les deux résistances 46 et 47, permet de faire circuler, à partir dudit point milieu 48, le premier courant de test I0 dans chaque bobine des capteurs de courant. Ce point milieu 48 constitue ainsi le point d'entrée du courant de la source de courant 44. Le premier courant de test I0 circule ainsi dans chaque capteur de courant et vient se superposer au courant Is représentatif du courant primaire.

La zone susceptible d'être déconnectée de chaque capteur de courant est représentée, à la figure 4, par des contacts 52 et un conducteur 53, tous les deux en pointillés.

Comme cela est représenté à la figure 3, le signal de tension d'entrée U aux bornes de chaque capteur de courant est fourni, par l'intermédiaire des moyens de pré-traitement 21 aux moyens de commande des moyens d'affichage 33. Les moyens de pré-traitement 21 comportent un module de filtrage 22 représenté à la figure 4 par une résistance 50 et un condensateur 51 associé à chaque capteur de courant. L'amplificateur et le convertisseur, des moyens de pré-traitement, ne sont pas spécifiquement représentés sur la figure 4 et font partie d'un circuit intégré à façon 59.

Sans déconnexion de chaque capteur de courant, le signal de tension d'entrée U est sensiblement égal au produit de la résistance 43 dudit capteur de courant et du courant Is représentatif du courant primaire auquel est superposé le premier courant de test I0 délivré par la source de courant. Le premier courant de test I0 est généralement négligeable par rapport au courant Is représentatif du courant primaire. En fonctionnement normal, ce premier courant de test I0 constitue un offset qui peut être corrigé par le module de correction d'offset 26 des moyens de traitement 25.

En cas d'une déconnexion d'un capteur de courant, le signal de tension d'entrée U est sensiblement égal à la tension source Us du générateur de courant.

Le schéma bloc de la figure 5 illustre, de manière plus détaillée, le pré-traitement du signal de tension d'entrée U issu de chaque capteur dé courant, le traitement dudit signal prétraité U', et les commandes de l'actionneur et des moyens d'affichage.

Le signal de tension d'entrée U est filtré dans une étape 102, amplifié dans une étape 103 avant d'être converti numériquement dans une étape 104. Le signal de tension d'entrée U, en l'absence de déconnexion d'un capteur de courant, comporte une composante liée au courant Is représentatif du courant primaire et une composante liée au premier courant de test I0 des moyens de contrôle.

Ce signal prétraité U' de la tension d'entrée U est ensuite traité sur deux voies distinctes et indépendantes, la première étant destinée à commander l'actionneur et la deuxième étant destinée à commander les moyens d'affichage. Ainsi, les moyens de contrôle de l'état des connexions du capteur de courant agissent sur les moyens d'affichage tout en maintenant le traitement pour commander l'actionneur en fonction de valeurs du signal représentatif de l'intensité du courant primaire, c'est à dire sans altérer l'aptitude du déclencheur à détecter une surintensité du courant primaire pour commander l'ouverture des contacts du conducteur principal.

En ce qui concerne la première voie, représentée sur la partie gauche du schéma bloc de la figure 5, le signal de tension d'entrée U filtré, amplifié et numérisé subit une première étape de traitement de correction d'offset 105. L'offset est en partie généré par les composants électroniques du circuit. Par ailleurs, la composante du signal de tension d'entrée U liée au premier courant de test I0 fournit également une contribution à l'offset. Sans déconnexion du capteur de courant, le signal prétraité U' ayant subi une correction de l'offset ne comporte plus qu'une seule composante liée au courant Is représentatif de l'intensité du courant primaire. Le signal prétraité U' corrigé de l'offset est ensuite traité pour sélectionner des signaux n'ayant pas changé de signe pendant une durée prédéterminée lors d'une étape 106 souvent connue sous le nom d'étape « anti-traîne ». Comme cela a été décrit précédemment, un tel traitement permet d'éviter tout déclenchement instantané intempestif de l'actionneur en réponse à une superposition de signaux parasites de fortes amplitudes sur les informations électriques. Le signal de tension d'entrée U ainsi prétraité et traité est ensuite envoyé dans plusieurs modules de commande 107, 108, 109, et 110 configurés pour déclencher à des seuils d'intensité du courant primaire différents et/ou avec des temps de réponse différents. Ces modules de commandes sont agencés pour fournir des informations à une interface de commande 111 destinée à commander l'actionneur.

En ce qui concerne la deuxième voie, représentée sur la partie droite du schéma bloc de la figure 5, le signal prétraité U', c'est à dire le signal de tension d'entrée U filtré, amplifié et numérisé, présente une composante liée au premier courant de test I0, une composante liée au courant Is représentatif du courant primaire et un offset généré par les composants électroniques du circuit. La valeur de l'intensité du premier courant de test I0 est avantageusement choisie de sorte que la composante du signal de tension d'entrée U liée au premier courant de test I0 puisse être distinguée de l'offset généré par les composants électroniques du déclencheur. De préférence, la valeur de l'intensité du premier courant de test I0 est choisie de sorte que la composante du signal de tension d'entrée U liée au premier courant de test I0 est significativement supérieure à l'offset généré par les composants électroniques du déclencheur. Par ailleurs, la valeur de la tension Us est, de préférence, choisie de sorte que la tension Us filtrée, amplifiée et numérisée, soit inférieure à un signal de tension d'entrée U correspondant au passage d'un courant égal au seuil de déclenchement instantané le plus bas du disjoncteur. Le signal prétraité U', c'est à dire le signal de tension d'entrée U filtré, amplifié et numérisé, est envoyé dans un comparateur 131, de façon à comparer ledit signal prétraité à un seuil d'affichage. Le seuil d'affichage est choisi inférieur à la tension source Us filtré, amplifié et numérisé à laquelle on soustrait la valeur de l'offset généré par les composants électroniques. Dans le cas d'une déconnexion d'un capteur de courant, le signal de tension d'entrée U est sensiblement égal à la tension source Us, et le signal prétraité U' correspondant est supérieur au seuil d'affichage. Dans ce cas, on incrémente un compteur 132, sinon on remet ce compteur à zéro 133. Une fois le compteur incrémenté, on compare 134 la valeur du compteur à une valeur prédéterminée correspondant à une durée minimum pour éliminer des signaux parasites. Tant que la valeur du compteur est au-dessous de la valeur prédéterminée, on réitère le processus à l'étape de comparaison 131. Une fois la valeur prédéterminée dépassée, on commande 135 l'affichage de la présence d'une déconnexion d'un capteur de courant.

L'ensemble électronique de traitement de la figure 3 comporte, en outre, des moyens de contrôle de défaut 34 du déclencheur reliés aux moyens de commande des moyens d'affichage permettant d'afficher, en plus, la présence de défauts dans le déclencheur. Ces défauts sont choisis parmi : une température anormale, un fonctionnement incorrect d'un circuit intégré, un réglage incorrect des seuils de déclenchement, et/ou une tension anormale aux bornes d'un condensateur de réserve d'énergie de l'actionneur.

Les moyens de contrôle de défaut du déclencheur peuvent être reliés aux moyens de commande des moyens d'affichage de manière à commander l'affichage de la présence d'un défaut en général, c'est à dire incluant toute déconnexion d'un capteur de courant.

L'ensemble électronique de traitement peut comporter, en outre, des moyens de contrôle de l'état de connexions de l'actionneur agissant sur l'alimentation électrique des moyens d'affichage pour afficher l'état des connexions de l'actionneur. La figure 3 représente des moyens d'alimentation électrique 35 qui alimentent les moyens de test 31, l'actionneur 6 et les moyens d'affichage 32 via ledit actionneur. Les moyens d'alimentation électrique 35 permettent, en outre, la charge d'un condensateur de stockage d'énergie électrique 161 associé à l'actionneur. L'actionneur 6 et les moyens d'affichages sont tous les deux connectés en série. Le condensateur de stockage d'énergie électrique 161 constituent ainsi une partie des moyens de contrôle de l'état des connexions de l'actionneur agissant sur l'alimentation électrique des moyens d'affichage. En effet, toute déconnexion de l'actionneur entraîne une perte de l'alimentation électrique des moyens d'affichage.

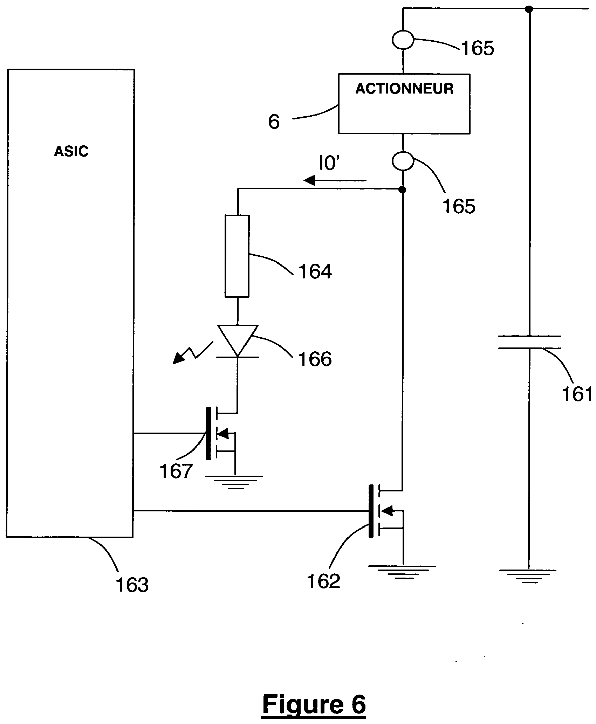

La figure 6 représente des moyens de contrôle de l'état de connexions de l'actionneur. L'actionneur 6 est couplé avec un condensateur 161 de stockage d'énergie permettant de maintenir ledit actionneur alimenté en permanence. Le déclenchement de l'actionneur est réalisé par un ordre de déclenchement fourni par un transistor de commande 162, ledit transistor faisant partie des moyens de commande de l'actionneur 28 représentés à la figure 3. La partie amont des moyens de commande de l'actionneur 28, en particulier les modules de commande correspondant aux différents seuils de déclenchement, n'est pas spécifiquement représentée à la figure 6, mais est clairement illustrée à la figure 5. Cette partie amont est comprise, dans le mode représenté à la figure 6, dans un circuit intégré à façon 163. Lors du déclenchement de l'actionneur 6, le transistor de commande 162 ferme le circuit en série avec l'actionneur de manière à faire passer un courant à travers ce dernier par décharge du condensateur 161.

Dans le mode représenté à la figure 6, les moyens de contrôle de l'état des connexions de l'actionneur comportent une alimentation, en l'occurrence le condensateur 161 de stockage d'énergie électrique de l'actionneur, destinée à faire circuler un second courant de test I0' dans l'actionneur et à travers une résistance 164 limitatrice de courant connectée en dérivation avec les moyens de commande 162 de l'actionneur, la valeur de ladite résistance étant choisie de façon à limiter l'intensité du second courant de test I0' à une valeur inférieure à un seuil de déclenchement de l'actionneur. De cette façon, les moyens de contrôle de l'état des connexions de l'actionneur agissent sur les moyens d'affichage tout en maintenant le traitement pour commander l'actionneur 6 en fonction de valeurs du signal Is représentatif de l'intensité du courant primaire, c'est à dire sans altérer l'aptitude du déclencheur à détecter une surintensité du courant primaire et à commander l'ouverture des contacts du conducteur principal par l'intermédiaire de l'actionneur 6.

L'actionneur est connecté dans le déclencheur par des contacts 165. Les déconnexions de l'actionneur ont généralement lieu au niveau de ces contacts. Les moyens d'affichage, en l'occurrence une diode luminescente 166, sont agencés par rapport aux moyens de contrôle de l'état des connexions de l'actionneur, en l'occurrence le condensateur 161 et la résistance 164, de sorte que lesdits moyens d'affichage soient alimentés électriquement par le second courant de test I0' uniquement en l'absence de déconnexion de l'actionneur. De cette façon, en l'absence de déconnexion de l'actionneur, la diode luminescente 166 est maintenu alimentée par la source d'énergie électrique que constitue le condensateur 161 de stockage d'énergie électrique de l'actionneur. La limitation du courant assurée par la résistance 164 permet un affichage n'influençant pas le déclenchement de l'actionneur. En présence d'une déconnexion, la diode luminescente 166 n'est plus alimentée.

La figure 6 représente également le raccordement des moyens d'affichage 166 avec un transistor de commande 167 appartenant aux moyens de commande 33 représentés à la figure 3. En présence d'une déconnexion d'un capteur de courant ou d'un défaut du déclencheur, l'interrupteur commandé que constitue le transistor 167 vient s'ouvrir en empêchant tout passage de courant dans le module d'affichage.

Ainsi, dans le cas représenté à la figure 3 et 6, les moyens d'affichage 32, 166 sont seulement alimentés quand aucune déconnexion n'est détectée. L'état éteint des moyens d'affichage attirera l'attention de l'utilisateur, sur le fait qu'un défaut ou qu'une déconnexion existe, et qu'il convient d'agir pour éliminer ce défaut ou cette déconnexion.

Le déclencheur représenté à la figure 3 comporte une prise test 91. Un boîtier de test peut être raccordé à la prise de test pour vérifier l'état des connexions du ou des capteurs et/ou de l'actionneur et/ou le bon fonctionnement du circuit intégré. Lorsque le déclencheur électronique n'est plus alimenté par les moyens d'alimentation électrique 35 du déclencheur ou du circuit électrique dans lequel il est disposé, la prise test 91 peut permettre également d'alimenter électriquement le disjoncteur par des moyens d'alimentation externe. Ainsi, il est possible de tester l'état des connexions du au moins un capteur de courant et/ou de l'actionneur et/ou des défauts du déclencheur, lorsque les moyens d'alimentation électrique 35 n'alimentent plus le déclencheur, par exemple dans des tests hors ligne.

Le déclencheur représenté à la figure 3 comporte des moyens de communication 92 permettant de reporter l'état des connexions du au moins un capteur de courant et/ou de l'actionneur et/ou des défauts du déclencheur.

Le déclencheur peut comporter des moyens de traitement 93 permettant de commander l'actionneur en fonction de l'état des connexions du au moins un capteur de courant et/ou de l'actionneur et/ou des défauts du déclencheur. Ainsi, ces moyens peuvent permettre de commander l'ouverture d'un conducteur principale du disjoncteur en réponse à une déconnexion ou un défaut.

Les moyens d'affichage, en l'occurrence la diode luminescente 166, peuvent également être associés à d'autres fonctions de signalisation, tel que, par exemple, la détection du dépassement d'un seuil de déclenchement. Ces autres fonctions de signalisation peuvent être cumulées ou exclusives.

Le mode de signalisation de ces autres fonctions de signalisation peut être un état d'allumage différent des moyens d'affichage, tel que, par exemple, un allumage clignotant des moyens d'affichage. De la même façon, l'extinction des moyens d'affichage, par exemple de la diode 166, permet d'indiquer l'existence d'un défaut ou d'une déconnexion.

Le déclencheur électronique peut être dans un disjoncteur ou dans un relais de signalisation et de déclenchement à l'extérieur du disjoncteur. Il peut être destiné à la commande d'un contacteur ou d'un relais.

L'actionneur peut être, à titre d'exemple, un relais électromagnétique ou tout autre type de relais.

Un avantage du déclencheur électronique de l'invention est qu'il est pourvu de moyens d'affichage n'altérant pas la fonction première dudit déclencheur sur les voies qui ne sont pas en défaut, c'est à dire son aptitude à détecter une surintensité du courant primaire dans un conducteur principal du disjoncteur, pour commander à l'actionneur l'ouverture dudit conducteur.

Un autre avantage du déclencheur électronique est que les moyens d'affichage sont configurés pour signaler la présence d'au moins une déconnexion, d'une part, et pour rétablir automatiquement l'affichage représentatif de son bon état de fonctionnement suite à toute intervention en vue de rétablir la connexion, d'autre part.

## Revendications

1. Déclencheur électronique (3) comprenant :
- au moins un capteur de courant (4) pour fournir un signal (Is) représentatif de l'intensité d'un courant primaire dans un conducteur principal (2),
- un actionneur (6) destiné à actionner un mécanisme (7) d'ouverture de contacts (8) en série avec le conducteur principal, et
- un ensemble électronique de traitement (5) pour commander ledit actionneur (6) en fonction de valeurs dudit signal (Is) représentatif de l'intensité du courant primaire, et
- des moyens de contrôle de l'état de connexions de l'actionneur (161, 164), **caractérisé en ce que** l'ensemble électronique de traitement (5) comporte :
- des moyens d'affichage (32 ; 166) de l'état de fonctionnement du déclencheur,
les moyens de contrôle (161, 164) agissant sur l'alimentation électrique des moyens d'affichage (166) pour afficher l'état desdites connexions de l'actionneur (6), tout en maintenant le traitement pour commander l'actionneur en fonction de valeurs dudit signal (Is) représentatif de l'intensité du courant primaire.

2. Déclencheur selon la revendication 1, **caractérisé en ce que** l'ensemble électronique de traitement (5) comporte des moyens de contrôle de l'état de connexions du au moins un capteur de courant (31 ; 44, 45), les moyens de contrôle agissant sur les moyens d'affichage pour afficher l'état desdites connexions.

3. Déclencheur selon la revendication 2, **caractérisé en ce que** les moyens de contrôle de l'état des connexions du au moins un capteur de courant (31) comprennent des moyens de test dotés d'une source de courant (44) destinée à faire circuler un premier courant de test (I0) dans le capteur de courant, ladite source de courant étant reliée audit capteur de courant par l'intermédiaire d'une résistance (45) limitatrice de l'intensité dudit premier courant de test (I0) de sorte que, sans déconnexion dudit capteur de courant, le premier courant de test (I0) se superpose au signal (Is) représentatif de l'intensité du courant primaire.

4. Déclencheur selon la revendication 3, **caractérisé en ce que** la source de courant (44) comporte un pont diviseur de tension dont le point milieu (48) est relié à la résistance limitatrice (45), ledit point milieu fournissant une tension source (Us).

5. Déclencheur selon la revendication 4, **caractérisé en ce que** le au moins un capteur de courant fournit un signal de tension d'entrée (U), de sorte que :
- sans déconnexion dudit capteur de courant, le signal de tension d'entrée (U) est sensiblement égal au produit d'une résistance (43) dudit capteur de courant et du courant (Is) représentatif du courant primaire auquel est superposé le premier courant de test (I0) délivré par la source de courant (44), et
- en cas de déconnexion dudit capteur de courant, le signal de tension d'entrée (U) est sensiblement égal à la tension source (Us) de la source de courant (44).

6. Déclencheur selon la revendication 5, **caractérisé en ce que** ledit déclencheur comporte des moyens de pré-traitement (21) du signal de tension d'entrée (U) dotés de moyens de filtrage (22), lesdits moyens de pré-traitement étant destinés à fournir un signal prétraité (U') à des moyens de commande de l'actionneur (28) d'une part, et à des moyens de commande des moyens d'affichage (33) d'autre part.

7. Déclencheur selon la revendication 6, **caractérisé en ce que** les moyens de pré-traitement (21) comportent, en outre, un amplificateur (23) et un convertisseur numérique (24).

8. Déclencheur selon l'une des revendications 6 ou 7, **caractérisé en ce que** les moyens de pré-traitement (21) sont reliés aux moyens de commande de l'actionneur (28) par l'intermédiaire de moyens de traitement (25) comprenant :
- une correction de l'offset (26), et
- une sélection des signaux n'ayant pas changé de signe pendant une durée prédéterminée (27).

9. Déclencheur selon l'une des revendications 1 à 8, **caractérisé en ce que** l'ensemble électronique de traitement (5) comporte des moyens de contrôle (34) de défauts du déclencheur reliés aux moyens de commande des moyens d'affichage pour afficher, en outre, la présence de défauts dans le déclencheur.

10. Déclencheur selon la revendication 9, **caractérisé en ce que** les défauts sont choisis parmi :
- une température anormale,
- un fonctionnement incorrect d'un circuit intégré,
- un réglage incorrect des seuils de déclenchement, et/ou
- une tension anormale aux bornes d'un condensateur de stockage d'énergie de l'actionneur.

11. Déclencheur selon l'une des revendications 1 à10, **caractérisé en ce que** les moyens de contrôle de l'état des connexions de l'actionneur (161, 164) comportent une alimentation (161) destinée à faire circuler un second courant de test (I0') dans l'actionneur et à travers une résistance limitatrice de courant (164) connectée en dérivation avec les moyens de commande de l'actionneur (28; 167), la valeur de ladite résistance étant choisie de façon à limiter l'intensité du second courant de test (I0') à une valeur inférieure à un seuil de déclenchement de l'actionneur.

12. Déclencheur selon la revendication 11, **caractérisé en ce que** le second courant de test (I0') est fourni par un condensateur de stockage d'énergie électrique (161) couplé avec l'actionneur.

13. Déclencheur selon l'une des revendications 11 à 12, **caractérisé en ce que** les moyens d'affichage (32; 166) sont agencés par rapport aux moyens de contrôle de l'état des connexions de l'actionneur, de sorte que lesdits moyens d'affichage sont alimentés électriquement par le second courant de test (I0') uniquement en l'absence de déconnexion de l'actionneur.

14. Déclencheur selon l'une des revendications 1 à 13, **caractérisé en ce que** les moyens d'affichage comportent une diode luminescente (166) qui est maintenue allumée ou clignotante uniquement en l'absence de déconnexion du ou des capteurs de courant et/ou de l'actionneur.

15. Déclencheur selon la revendication 14, **caractérisé en ce que** la diode luminescente (166) des moyens d'affichage est maintenue allumée ou clignotante uniquement en l'absence de déconnexion du ou des capteurs de courant et/ou de l'actionneur, et en l'absence de défaut.

16. Déclencheur selon l'une des revendications 1 à 15, **caractérisé en ce qu'**il comporte une prise test (91).

17. Déclencheur selon la revendication 16, **caractérisé en ce que** la prise de test (91) est raccordée à un boîtier de test pour vérifier l'état des connexions du ou des capteur(s) de courant et/ou de l'actionneur et/ou du bon fonctionnement du circuit intégré.

18. Déclencheur selon l'une des revendications 1 à 17, **caractérisé en ce qu'**il comporte des moyens de communication (92) permettant de reporter l'état des connexions du au moins un capteur de courant et/ou de l'actionneur et/ou des défauts du déclencheur.

19. Déclencheur selon l'une des revendications 1 à 18, **caractérisé en ce qu'**il comporte des moyens de traitement (93) permettant de commander l'actionneur en fonction de l'état des connexions du au moins un capteur de courant et/ou de l'actionneur et/ou des défauts du déclencheur.

20. Disjoncteur comprenant :
- au moins un conducteur principal (2),
- un mécanisme d'ouverture (7) de contacts (8) en série avec le conducteur principal, et
- un déclencheur électronique (1) avec au moins un capteur de courant (4) pour fournir un signal (Is) représentatif de l'intensité du courant dans le conducteur principal, un actionneur (6) et un ensemble électronique de traitement (5) pour commander ledit actionneur en fonction de valeurs dudit signal (Is) représentatif de l'intensité du courant primaire,
**caractérisé en ce que** le déclencheur est un déclencheur selon l'une des revendications 1 à 19.

21. Procédé de surveillance de l'état de connexions d'un déclencheur électronique (3) comportant :
- la fourniture d'un signal (Is) représentatif de l'intensité d'un courant primaire dans un conducteur principal (2), à l'aide d'au moins un capteur de courant (4),
- l'actionnement d'un mécanisme (7) d'ouverture de contacts (8) en série avec le conducteur principal à l'aide d'un actionneur (6), et
- la commande dudit actionneur en fonction de valeurs dudit signal (Is) représentatif de l'intensité du courant primaire, et
- le contrôle de l'état des connexions de l'actionneur,
**caractérisé en ce qu'**il comporte, en outre, tout en maintenant le traitement pour commander l'actionneur en fonction de valeurs dudit signal (Is) représentatif de l'intensité du courant primaire :
- la commande d'affichage de l'état des connexions de l'actionneur, et
- l'alimentation électrique des moyens d'affichage uniquement en l'absence de déconnexion de l'actionneur.

22. Procédé selon la revendication 21, **caractérisé en ce qu'**il comporte le contrôle de l'état des connexions du au moins un capteur et la commande d'affichage dudit état de connexions.

23. Procédé selon la revendication 22, **caractérisé en ce qu'**il comporte, lors du contrôle de l'état des connexions du au moins un capteur de courant, la circulation d'un premier courant de test (I0) dans le capteur de courant se superposant au signal (Is) représentatif de l'intensité du courant primaire.

24. Procédé selon l'une des revendications 22 ou 23, **caractérisé en ce qu'**il comporte, lors du contrôle de l'état des connexions du au moins un capteur de courant, la fourniture d'un signal de tension d'entrée (U),
- sans déconnexion dudit capteur de courant, le signal de tension d'entrée (U) étant sensiblement égal au produit d'une résistance dudit capteur de courant et du courant (Is) représentatif du courant primaire auquel est superposé le premier courant de test (I0) délivré par la source de courant, et
- en cas de déconnexion dudit capteur de courant, le signal de tension d'entrée (U) étant sensiblement égal à une tension source (Us) de la source de courant.

25. Procédé selon la revendication 24, **caractérisé en ce qu'**il comporte le pré-traitement du signal de tension d'entrée (U), ledit pré-traitement comprenant une étape de filtrage (102).

26. Procédé selon la revendication 25, **caractérisé en ce que** le pré-traitement du signal de tension d'entrée (U) comprend, en outre, une étape d'amplification (103) et une étape de conversion numérique (104) dudit signal.

27. Procédé selon l'une des revendications 24 à 26, **caractérisé en ce que** la commande d'affichage est réalisée à partir d'un signal de tension d'entrée prétraité (U') afin d'afficher l'état des connexions du au moins un capteur de courant.

28. Procédé selon l'une des revendications 24 à 27, **caractérisé en ce qu'**il comporte le traitement du signal de tension d'entrée prétraité (U') de manière à réaliser :
- une correction de l'offset (105), et
- une sélection des signaux n'ayant pas changé de signe pendant une durée prédéterminée (106).

29. Procédé selon l'une des revendications 24 à 28, **caractérisé en ce qu'**il comporte le contrôle de défauts du déclencheur et la commande d'affichage pour afficher, en outre, l'état des défauts du déclencheur.

30. Procédé selon la revendication 29, **caractérisé en ce qu'**on choisit les défauts du déclencheur parmi :
- une température anormale,
- un fonctionnement incorrect d'un circuit intégré,
- un réglage incorrect des seuils de déclenchement, et/ou
- une tension anormale aux bornes d'un condensateur de stockage d'énergie de l'actionneur.

31. Procédé selon la revendication 30, **caractérisé en ce qu'**il comporte la circulation d'un second courant de test (I0') dans l'actionneur et la limitation de l'intensité dudit courant de test (I0') à une valeur inférieure à un seuil de déclenchement de l'actionneur.

32. Procédé selon l'une des revendications 30 ou 31, **caractérisé en ce qu'**il comporte l'alimentation électrique des moyens d'affichage par le second courant de test (I0').

## Patentansprüche

1. Elektronische Auslösevorrichtung (3), umfassend:
- mindestens einen Stromfühler (4), um ein Signal (Is) zu liefern, das für die Stärke eines Primärstroms in einem Hauptleiter (2) repräsentativ ist,
- einen Aktuator (6), der dazu bestimmt ist, einen Mechanismus (7) zum Öffnen von Kontakten (8) in Serie mit dem Hauptschalter zu betätigen, und
- eine elektronische Bearbeitungseinheit (5), um den Aktuator (6) in Abhängigkeit von Werten des Signals (Is), das für die Stärke des Primärstroms repräsentativ ist, zu steuern, und
- Mittel zur Kontrolle des Zustands von Anschlüssen des Aktuators (161, 164), **dadurch gekennzeichnet, dass** die elektronische Bearbeitungseinheit (5) umfasst:
- Anzeigemittel (32; 166) des Betriebszustands der Auslösevorrichtung,
wobei die Kontrollmittel (161, 164) auf die elektrische Versorgung der Anzeigemittel (166) einwirken, um den Zustand der Anschlüsse des Aktuators (6) anzuzeigen, wobei die Bearbeitung beibehalten wird, um den Aktuator in Abhängigkeit von Werten des für die Stärke des Primärstroms repräsentativen Signals (Is) zu steuern.

2. Auslösevorrichtung nach Anspruch 1, **dadurch gekennzeichnet, dass** die elektronische Bearbeitungseinheit (5) Mittel zur Kontrolle des Zustands der Anschlüsse des mindestens einen Stromfühlers (31; 44, 45) umfasst, wobei die Kontrollmittel auf die Anzeigemittel einwirken, um den Zustand der Anschlüsse anzuzeigen.

3. Auslösevorrichtung nach Anspruch 2, **dadurch gekennzeichnet, dass** die Mittel zur Kontrolle des Zustands der Anschlüsse des mindestens einen Stromfühlers (31) Testmittel umfassen, die mit einer Stromquelle (44) versehen sind, die dazu bestimmt ist, einen ersten Teststrom (I0) in dem Stromfühler zirkulieren zu lassen, wobei die Stromquelle mit dem Stromfühler über einen Widerstand (45) verbunden ist, der die Stärke des ersten Teststroms (I0) begrenzt, so dass der erste Teststrom (I0) ohne Trennung des Stromfühlers das für die Stärke des Primärstroms repräsentativen Signal (Is) überlagert.

4. Auslösevorrichtung nach Anspruch 3, **dadurch gekennzeichnet, dass** die Stromquelle (44) eine Spannungsteilerbrücke umfasst, deren Mittelpunkt (48) mit dem Begrenzungswiderstand (45) verbunden ist, wobei der Mittelpunkt eine Quellenspannung (Us) liefert.

5. Auslösevorrichtung nach Anspruch 4, **dadurch gekennzeichnet, dass** der mindestens eine Stromfühler ein Eingangsspannungssignal (U) liefert, so dass:
- ohne Trennung des Stromfühlers das Eingangsspannungssignal (U) im Wesentlichen gleich dem Produkt eines Widerstands (43) des Stromfühlers und des Stroms (Is) ist, der für den Primärstrom repräsentativ ist, dem der erste Teststrom (I0), der von der Stromquelle (44) geliefert wird, überlagert ist, und
- im Falle einer Trennung des Stromfühlers das Eingangsspannungssignal (U) im Wesentlichen gleich der Quellenspannung (Us) der Stromquelle (44) ist.

6. Auslösevorrichtung nach Anspruch 5, **dadurch gekennzeichnet, dass** die Auslösevorrichtung Mittel (21) zur Vorbearbeitung des Eingangsspannungssignals (U) umfasst, die mit Filtermitteln (22) versehen sind, wobei die Vorbearbeitungsmittel dazu bestimmt sind, ein vorbearbeitetes Signal (U') an Steuermittel des Aktuators (28) einerseits und an Steuermittel der Anzeigemittel (33) andererseits zu liefern.

7. Auslösevorrichtung nach Anspruch 6, **dadurch gekennzeichnet, dass** die Vorbearbeitungsmittel (21) ferner einen Verstärker (23) und einen digitalen Wandler (24) umfassen.

8. Auslösevorrichtung nach einem der Ansprüche 6 oder 7, **dadurch gekennzeichnet, dass** die Vorbearbeitungsmittel (21) mit den Steuermitteln des Aktuators (28) mit Hilfe von Bearbeitungsmitteln (25) verbunden sind, umfassend:
- eine Offset-Korrektur (26), und
- eine Auswahl der Signale, die während einer vorbestimmten Dauer (27) das Vorzeichen nicht geändert haben.

9. Auslösevorrichtung nach einem der Ansprüche 1 bis 8, **dadurch gekennzeichnet, dass** die elektronische Bearbeitungseinheit (5) Mittel (34) zur Kontrolle von Fehlern der Auslösevorrichtung umfasst, die mit den Steuermitteln der Anzeigemittel verbunden sind, um ferner das Vorhandensein von Fehlern in der Auslösevorrichtung anzuzeigen.

10. Auslösevorrichtung nach Anspruch 9, **dadurch gekennzeichnet, dass** die Fehler ausgewählt sind unter:
- einer abnormalen Temperatur,
- einer nicht korrekten Funktion einer integrierten Schaltung,
- einer nicht korrekten Einstellung der Auslösegrenzwerte, und/oder
- einer abnormalen Spannung an den Klemmen eines Energiespeicherkondensators des Aktuators.

11. Auslösevorrichtung nach einem der Ansprüche 1 bis 10, **dadurch gekennzeichnet, dass** die Mittel zur Kontrolle des Zustands der Anschlüsse des Aktuators (161, 164) eine Versorgung (161) umfassen, die dazu bestimmt ist, einen zweiten Teststrom (I0') in dem Aktuator und durch einen Strombegrenzungswiderstand (164), der verzweigt an die Steuermittel des Aktuators (28; 167) angeschlossen ist, zirkulieren zu lassen, wobei der Wert des Widerstands derart gewählt ist, dass die Stärke des zweiten Teststroms (I0') auf einen Wert unter einem Auslösegrenzwert des Aktuators begrenzt wird.

12. Auslösevorrichtung nach Anspruch 11, **dadurch gekennzeichnet, dass** der zweite Teststrom (I0') von einem Kondensator zur Speicherung von elektrischer Energie (161), der mit dem Aktuator gekoppelt ist, geliefert wird.

13. Auslösevorrichtung nach einem der Ansprüche 11 bis 12, **dadurch gekennzeichnet, dass** die Anzeigemittel (32; 166) in Bezug zu den Mitteln zur Kontrolle des Zustands der Anschlüsse des Aktuators derart angeordnet sind, dass die Anzeigemittel elektrisch mit dem zweiten Teststrom (I0') nur bei Nichtvorliegen einer Trennung des Aktuators versorgt werden.

14. Auslösevorrichtung nach einem der Ansprüche 1 bis 13, **dadurch gekennzeichnet, dass** die Anzeigemittel eine Leuchtdiode (166) umfasst, die nur bei Nichtvorliegen einer Trennung des oder der Stromfühler und/oder des Aktuators leuchtend oder blinkend gehalten wird.

15. Auslösevorrichtung nach Anspruch 14, **dadurch gekennzeichnet, dass** die Leuchtdiode (166) der Anzeigemittel nur bei Nichtvorliegen einer Trennung des oder der Stromfühler und/oder des Aktuators und bei Nichtvorliegen eines Fehlers leuchtend oder blinkend gehalten wird.

16. Auslösevorrichtung nach einem der Ansprüche 1 bis 15, **dadurch gekennzeichnet, dass** sie einen Testanschluss (91) umfasst.

17. Auslösevorrichtung nach Anspruch 16, **dadurch gekennzeichnet, dass** der Testanschluss (91) an ein Testgehäuse angeschlossen ist, um den Zustand der Anschlüsse des oder der Stromfühler(s) und/oder des Aktuators und/oder die richtige Funktion der integrierten Schaltung zu überprüfen.

18. Auslösevorrichtung nach einem der Ansprüche 1 bis 17, **dadurch gekennzeichnet, dass** sie Kommunikationsmittel (92) umfasst, die es ermöglichen, den Zustand der Anschlüsse des mindestens einen Stromfühlers und/oder des Aktuators und/oder die Fehler der Auslösevorrichtung mitzuteilen.

19. Auslösevorrichtung nach einem der Ansprüche 1 bis 18, **dadurch gekennzeichnet, dass** sie Bearbeitungsmittel (93) umfasst, die es ermöglichen, den Aktuator in Abhängigkeit vom Zustand der Anschlüsse des mindestens einen Stromfühlers und/oder des Aktuators und/oder den Fehlern der Auslösevorrichtung zu steuern.

20. Trennschalter, umfassend:
- mindestens einen Hauptleiter (2),
- einen Öffnungsmechanismus (7) der Kontakte (8) in Serie mit dem Hauptleiter, und
- eine elektronische Auslösevorrichtung (1) mit mindestens einem Stromfühler (4), um ein Signal (Is), das für die Stärke des Stroms im Hauptleiter repräsentativ ist, zu liefern, einem Aktuator (6) und einer elektronischen Bearbeitungseinheit (5), um den Aktuator in Abhängigkeit von Werten des für die Stärke des Primärstroms repräsentativen Signals (Is) zu steuern,
**dadurch gekennzeichnet, dass** die Auslösevorrichtung eine Auslösevorrichtung nach einem der Ansprüche 1 bis 19 ist.

21. Verfahren zur Überwachung des Zustands von Anschlüssen einer elektrischen Auslösevorrichtung (3), umfassend:
- die Lieferung eines Signals (Is), das für die Stärke eines Primärstroms in einem Hauptleiter (2) repräsentativ ist, mit Hilfe mindestens eines Stromfühlers (4),
- die Betätigung eines Mechanismus (7) zum Öffnen von Kontakten (8) in Serie mit dem Hauptleiter mit Hilfe eines Aktuators (6), und
- die Steuerung des Aktuators in Abhängigkeit von Werten des für die Stärke des Primärstroms repräsentativen Signals (Is), und
- die Kontrolle des Zustands der Anschlüsse des Aktuators,
**dadurch gekennzeichnet, dass** es ferner unter Beibehaltung der Bearbeitung, um den Aktuator in Abhängigkeit von Werten des für die Stärke des Primärstroms repräsentativen Signals (Is) zu steuern, umfasst:
- die Steuerung einer Anzeige des Zustands der Anschlüsse des Aktuators, und
- die elektrische Versorgung der Anzeigemittel nur bei Nichtvorliegen einer Trennung des Aktuators.

22. Verfahren nach Anspruch 21, **dadurch gekennzeichnet, dass** es die Kontrolle des Zustands der Anschlüsse des mindestens einen Fühlers und die Anzeigesteuerung des Anschlusszustands umfasst.

23. Verfahren nach Anspruch 22, **dadurch gekennzeichnet, dass** es bei der Kontrolle des Zustands der Anschlüsse des mindestens einen Stromfühlers die Zirkulation eines ersten Teststroms (I0) in dem Stromfühler, die das für die Stärke des Primärstroms repräsentative Signal (Is) überlagert, umfasst.

24. Verfahren nach einem der Ansprüche 22 oder 23, **dadurch gekennzeichnet, dass** es bei der Kontrolle des Zustands der Anschlüsse des mindestens einen Stromfühlers die Lieferung eines Eingangsspannungssignals (U) umfasst,
- ohne Trennung des Stromfühlers, wobei das Eingangsspannungssignal (U) im Wesentlichen gleich dem Produkt eines Widerstands des Stromfühlers und des Stroms (Is) ist, der für den Primärstrom repräsentativ ist, dem der erste Teststrom (I0), der von der Stromquelle geliefert wird, überlagert ist, und
- im Falle einer Trennung des Stromfühlers, wobei das Eingangsspannungssignal (U) im Wesentlichen gleich einer Quellenspannung (Us) der Stromquelle ist.

25. Verfahren nach Anspruch 24, **dadurch gekennzeichnet, dass** es die Vorbearbeitung des Eingangsspannungssignals (U) umfasst, wobei die Vorbearbeitung einen Filterschritt (102) umfasst.

26. Verfahren nach Anspruch 25, **dadurch gekennzeichnet, dass** die Vorbearbeitung des Eingangsspannungssignals (U) ferner einen Verstärkungsschritt (103) und einen Schritt der digitalen Umwandlung (104) des Signals umfasst.

27. Verfahren nach einem der Ansprüche 24 bis 26, **dadurch gekennzeichnet, dass** die Anzeigesteuerung auf Basis eines vorbearbeiteten Eingangsspannungssignals (U') erfolgt, um den Zustand der Anschlüsse des mindestens einen Stromfühlers anzuzeigen.

28. Verfahren nach einem der Ansprüche 24 bis 27, **dadurch gekennzeichnet, dass** es die Bearbeitung des vorbearbeiteten Eingangsspannungssignals (U') umfasst, um durchzuführen:
- eine Offsetkorrektur (105), und
- eine Auswahl der Signale, die während einer vorbestimmten Dauer (106) nicht das Vorzeichen geändert haben.

29. Verfahren nach einem der Ansprüche 24 bis 28, **dadurch gekennzeichnet, dass** es die Kontrolle von Fehlern der Auslösevorrichtung und die Anzeigesteuerung umfasst, um ferner den Zustand der Fehler der Auslösevorrichtung anzuzeigen.

30. Verfahren nach Anspruch 29, **dadurch gekennzeichnet, dass** die Fehler der Auslösevorrichtung ausgewählt sind unter:
- einer abnormalen Temperatur,
- einer nicht korrekten Funktion einer integrierten Schaltung,
- einer nicht korrekten Einstellung der Auslösegrenzwerte, und/oder
- einer abnormalen Spannung an den Klemmen eines Energiespeicherkondensators des Aktuators.

31. Verfahren nach Anspruch 30, **dadurch gekennzeichnet, dass** es die Zirkulation eines zweiten Teststroms (I0') im Aktuator und die Begrenzung der Stärke des Teststroms (I0') auf einen Wert unter einem Auslösegrenzwert des Aktuators umfasst.

32. Verfahren nach einem der Ansprüche 30 oder 31, **dadurch gekennzeichnet, dass** es die elektrische Versorgung der Anzeigemittel durch den zweiten Teststrom (I0') umfasst.

## Claims

1. Electronic tripping device (3) comprising:
- at least one current sensor (4) for delivering a signal (Is) that is representative of the intensity of a primary current in a main conductor (2);
- an actuator (6) that is intended to actuate a mechanism (7) for opening contacts (8) in series with the main conductor;
- an electronic processing assembly (5) for controlling said actuator (6) according to values of said signal (Is) that is representative of the intensity of the primary current; and
- means (161, 164) for monitoring the state of connections of the actuator, **characterized in that** the electronic processing assembly (5) includes:
- means (32; 166) for displaying the operating state of the tripping device,
the monitoring means (161, 164) acting on the electrical power supply of the display means (166) in order to display the state of said connections of the actuator (6), while maintaining the processing operation for controlling the actuator according to values of said signal (Is) that is representative of the intensity of the primary current.

2. Tripping device according to Claim 1, **characterized in that** the electronic processing assembly (5) includes means for monitoring the state of connections of the at least one current sensor (31; 44, 45), the monitoring means acting on the display means in order to display the state of said connections.

3. Tripping device according to Claim 2, **characterized in that** the means for monitoring the state of the connections of the at least one current sensor (31) comprise test means provided with a current source (44) that is intended to pass a first test current (10) through the current sensor, said current source being connected to said current sensor via a resistor (45) limiting the intensity of said first test current (10) such that, without disconnecting said current sensor, the first test current (10) is superposed onto the signal (Is) that is representative of the intensity of the primary current.

4. Tripping device according to Claim 3, **characterized in that** the current source (44) includes a voltage divider bridge, the midpoint (48) of which is connected to the limiting resistor (45), said midpoint delivering a source voltage (Us).

5. Tripping device according to Claim 4, **characterized in that** the at least one current sensor delivers an input voltage signal (U), such that:
without disconnecting said current sensor, the input voltage signal (U) is substantially equal to the product of a resistance (43) of said current sensor and of the current (Is) that is representative of the primary current onto which the first test current (10) delivered by the current source (44) is superposed; and
- in the event that said current sensor is disconnected, the input voltage signal (U) is substantially equal to the source voltage (Us) of the current source (44).

6. Tripping device according to Claim 5, **characterized in that** said tripping device includes means (21) for preprocessing the input voltage signal (U) that are provided with filtering means (22), said preprocessing means being intended to deliver a preprocessed signal (U') both to means (28) for controlling the actuator and to means for controlling the display means (33).

7. Tripping device according to Claim 6, **characterized in that** the preprocessing means (21) further include an amplifier (23) and a digital converter (24).

8. Tripping device according to either of Claims 6 and 7, **characterized in that** the preprocessing means (21) are connected to the means (28) for controlling the actuator via processing means (25) comprising:
- an operation (26) of correcting the offset; and
- an operation (27) of selecting the signals that have not changed sign for a predetermined duration.

9. Tripping device according to one of Claims 1 to 8, **characterized in that** the electronic processing assembly (5) includes means (34) for monitoring faults in the tripping device that are connected to the means for controlling the display means in order to display, in addition, the presence of faults in the tripping device.

10. Tripping device according to Claim 9, **characterized in that** the faults are chosen from:
- an abnormal temperature;
- an integrated circuit operating incorrectly;
- the trip thresholds being set incorrectly; and/or
- an abnormal voltage across the terminals of an energy storage capacitor of the actuator.

11. Tripping device according to one of Claims 1 to 10, **characterized in that** the means (161, 164) for monitoring the state of the connections of the actuator include a power supply (161) that is intended to pass a second test current (I0') through the actuator and through a current-limiting resistor (164) that is shunt-connected to the means (28; 167) for controlling the actuator, the resistance value of said resistor being chosen so as to limit the intensity of the second test current (I0') to a value that is lower than a trip threshold of the actuator.

12. Tripping device according to Claim 11, **characterized in that** the second test current (I0') is delivered by an electrical energy storage capacitor (161) that is coupled to the actuator.

13. Tripping device according to either of Claims 11 and 12, **characterized in that** the display means (32; 166) are arranged with respect to the means for monitoring the state of the connections of the actuator such that said display means are electrically supplied with power by the second test current (I0') only when the actuator is not disconnected.

14. Tripping device according to one of Claims 1 to 13, **characterized in that** the display means include a light-emitting diode (166) that is kept on or continues flashing only when the one or more current sensors and/or the actuator are not disconnected.

15. Tripping device according to Claim 14, **characterized in that** the light-emitting diode (166) of the display means is kept on or continues flashing only when the one or more current sensors and/or the actuator are not disconnected and when there is no fault.

16. Tripping device according to one of Claims 1 to 15, **characterized in that** it includes a test connector (91).

17. Tripping device according to Claim 16, **characterized in that** the test connector (91) is connected to a test unit for checking the state of the connections of the one or more current sensors and/or of the actuator and/or that the integrated circuit is operating correctly.

18. Tripping device according to one of Claims 1 to 17, **characterized in that** it includes communication means (92) allowing the state of the connections of the at least one current sensor and/or of the actuator and/or of faults in the tripping device to be reported.

19. Tripping device according to one of Claims 1 to 18, **characterized in that** it includes processing means (93) allowing the actuator to be controlled according to the state of the connections of the at least one current sensor and/or of the actuator and/or of faults in the tripping device.

20. Circuit breaker comprising:
- at least one main conductor (2);
- a mechanism (7) for opening contacts (8) in series with the main conductor; and
- an electronic tripping device (1) with at least one current sensor (4) for delivering a signal (Is) that is representative of the intensity of the current in the main conductor, an actuator (6) and an electronic processing assembly (5) for controlling said actuator according to values of said signal (Is) that is representative of the intensity of the primary current,
**characterized in that** the tripping device is a tripping device according to one of Claims 1 to 19.

21. Method for monitoring the state of connections of an electronic tripping device (3) including:
- the operation of delivering a signal (Is) that is representative of the intensity of a primary current in a main conductor (2) using at least one current sensor (4);
- the operation of actuating a mechanism (7) for opening contacts (8) in series with the main conductor using an actuator (6);
- the operation of controlling said actuator according to values of said signal (Is) that is representative of the intensity of the primary current; and
- the operation of monitoring the state of the connections of the actuator,
**characterized in that** it further includes, while maintaining the processing operation for controlling the actuator according to values of said signal (Is) that is representative of the intensity of the primary current:
- the operation of controlling the display of the state of the connections of the actuator; and
- the operation of supplying power to the display means only when the actuator is not disconnected.

22. Method according to Claim 21, **characterized in that** it includes the operation of monitoring the state of the connections of the at least one sensor and the operation of controlling the display of said state of connections.

23. Method according to Claim 22, **characterized in that** it includes, while the state of the connections of the at least one current sensor is being monitored, the operation of passing a first test current (I0) through the current sensor superposed onto the signal (Is) that is representative of the intensity of the primary current.

24. Method according to either of Claims 22 and 23, **characterized in that** it includes, while the state of the connections of the at least one current sensor is being monitored, the operation of delivering an input voltage signal (U):
- without disconnecting said current sensor, the input voltage signal (U) being substantially equal to the product of a resistance of said current sensor and of the current (Is) that is representative of the primary current onto which the first test current (I0) delivered by the current source is superposed; and
- in the event that said current sensor is disconnected, the input voltage signal (U) being substantially equal to a source voltage (Us) of the current source.

25. Method according to Claim 24, **characterized in that** it includes the operation of preprocessing the input voltage signal (U), said preprocessing operation comprising a filtering step (102).

26. Method according to Claim 25, **characterized in that** the operation of preprocessing the input voltage signal (U) further comprises a step (103) of amplifying and a step (104) of digitally converting said signal.

27. Method according to one of Claims 24 to 26, **characterized in that** the display control operation is carried out on the basis of a preprocessed input voltage signal (U') in order to display the state of the connections of the at least one current sensor.

28. Method according to one of Claims 24 to 27, **characterized in that** it includes the operation of processing the preprocessed input voltage signal (U') so as to carry out:
- an operation (105) of correcting the offset; and
- an operation (106) of selecting the signals that have not changed sign for a predetermined duration.

29. Method according to one of Claims 24 to 28, **characterized in that** it includes the operation of monitoring faults in the tripping device and the operation of controlling the display in order to display, in addition, the state of faults in the tripping device.

30. Method according to Claim 29, **characterized in that** the faults in the tripping device are chosen from:
- an abnormal temperature;
- an integrated circuit operating incorrectly;
- the trip thresholds being set incorrectly; and/or
- an abnormal voltage across the terminals of an energy storage capacitor of the actuator.

31. Method according to Claim 30, **characterized in that** it includes the operation of passing a second test current (I0') through the actuator and the operation of limiting the intensity of said test current (I0') to a value that is lower than a trip threshold of the actuator.

32. Method according to either of Claims 30 and 31, **characterized in that** it includes the operation of supplying power to the display means by means of the second test current (I0').
